# EUROPEAN PATENT APPLICATION

(11) **EP 4 535 444 A1**
(43) Date of publication of application: **09.04.2025**
(21) Application number: 22948561.0
(22) Date of filing: 30.06.2022
(51) Int. Cl.: H01M 4/13, H01M 4/136, H01M 4/133, H01M 4/36, H01M 4/134, H01M 4/131, H01M 4/505, H01M 4/525, H01M 10/0525

(54) **ELECTROCHEMICAL APPARATUS AND ELECTRONIC DEVICE**

(71) Applicant: Ningde Amperex Technology Limited, Ningde, Fujian 352100 (CN)
(72) Inventor: HU, Yuhan, Ningde, Fujian 352100 (CN); ZHANG, Yafei, Ningde, Fujian 352100 (CN)
(74) Representative: Klunker IP Patentanwälte PartG mbB
(86) International application number: PCT/CN2022/102955
(87) International publication number: WO 2024/000458

(57) **Abstract**

This application relates to an electrochemical apparatus and an electronic device, including an electrode sheet. The electrode sheet includes a current collector and an active material layer, and the active material layer is applied to the current collector. The active material layer includes a first active material and a second active material, and a gram capacity of the first active material is greater than a gram capacity of the second active material. The active material layer is provided with at least one first pore structure, and the active material layer satisfies the following conditions: (a) 0≤M/d≤0.5, where M is a mass percentage of the first active material in the active material layer, and d is a ratio of a depth of the first pore structure to a thickness of the active material layer; and (b) -1%≤0.2M-S≤3%, where S is a porosity of the active material layer. Adding the first active material with a larger gram capacity can increase the capacity of the electrochemical apparatus. The first pore structure can become a new lithium ion liquid phase transmission channel, allowing lithium ions to more easily intercalate into the active material layer in the electrode sheet, so as to reduce the impedance of the electrode sheet, thus helping to meet rapid charge and discharge demands of the electrochemical apparatus.

## Description

### TECHNICAL FIELD

Embodiments of this application relate to the field of battery technologies, and in particular, to an electrochemical apparatus and an electronic device.

### BACKGROUND

The electrochemical apparatuses are power sources of electronic devices and are crucial for ensuring the normal use of the electronic devices. With the widespread use of electronic devices such as mobile phones and laptops, the capacity requirements for electrochemical apparatuses are increasingly high. Most of the negative electrode of the conventional electrochemical apparatuses are made of graphite material, which has a relatively low theoretical gram capacity (372 mAh/g) and cannot meet growing demands for high-capacity electrochemical apparatuses.

Silicon is abundant and has a much higher gram capacity (4200 mAh/g) than graphite, and thus is considered the most promising next-generation negative electrode active material. However, the electronic/ionic conductivity of the silicon material is lower than that of the graphite material, and in terms of kinetic parameters of the electrode sheet, such as the impedance/charge and discharge rate, the silicon material lags behind the conventional graphite electrode sheet, making it difficult to meet rapid charge and discharge demands of electrochemical apparatuses.

Some embodiments of this application are intended to provide an electrochemical apparatus and an electronic device to at least increase the capacity and the charge and discharge speed of the electrochemical apparatus.

In these embodiments of this application, to resolve the technical problems, the following technical solutions are used:

According to a first aspect, an embodiment of this application provides an electrochemical apparatus, including an electrode sheet. The electrode sheet includes a current collector and an active material layer, and the active material layer is applied to the current collector. The active material layer includes a first active material and a second active material, and a gram capacity of the first active material is greater than a gram capacity of the second active material. The active material layer is provided with at least one first pore structure, and the active material layer satisfies the following conditions: (a) 0≤M/d≤0.5, where M is a mass percentage of the first active material in the active material layer, and d is a ratio of a depth of the first pore structure to a thickness of the active material layer; and (b) -1%≤0.2M-S≤3%, where S is a porosity of the active material layer.

Adding the first active material with a higher gram capacity can increase the capacity of the electrochemical apparatus. The first pore structure can be fully infiltrated and filled by an electrolyte, and becomes a new lithium ion liquid phase transmission channel, replacing the fixed channel with a low diffusion coefficient. The lithium ions deeply intercalate into the electrode sheet through the newly constructed first pore structure. In addition to the original longitudinal diffusion on the surface of the electrode sheet, a new path for lateral diffusion at the first pore structure of the electrode sheet is added, effectively increasing the reaction area of the solid-liquid interface. The first pore structure allows the lithium ions to more easily intercalate into the active material layer in the electrode sheet, reducing the difficulty of intercalation and deintercalation of the lithium ions in the active material in the electrode sheet, so as to reduce the impedance of the electrode sheet, thus improving the overall kinetic performance of the electrode sheet. This is conducive to meeting rapid charge and discharge demands of the electrochemical apparatus. In addition, the active material layer satisfies 0≤M/d≤0.5 and -1%≤0.2M-S≤3% to achieve optimal parameters of the first pore structure, thereby ensuring the capacity or energy density of the electrochemical apparatus and the kinetic performance of the electrode sheet.

According to some embodiments of this application, S≤10%. A higher percentage of the first active material in the active material layer requires more first pore structures to improve the kinetic performance of the electrode sheet deteriorated by the first active material. However, more first pore structures inevitably cause a loss in the capacity or energy density of the electrode sheet and even the entire electrochemical apparatus. In these embodiments of this application, it is preferable to choose a porosity S of less than or equal to 10%.

According to some embodiments of this application, the depth of the first pore structure is 50% to 100% of the thickness of the active material layer. The first pore structure, having a certain depth into the active material layer, allows more of the electrolyte to infiltrate the active material layer.

According to some embodiments of this application, the first active material includes at least one of silicon, silicon oxide, silicon-carbon composite, or silicon alloy.

According to some embodiments of this application, the second active material includes at least one of graphite, soft carbon, hard carbon, carbon fiber, or meso-carbon microbeads.

According to some embodiments of this application, the first active material is silicon, and the second active material is carbon.

According to some embodiments of this application, M is 1% to 45%.

The theoretical gram capacity of 4200 mAh/g of silicon is greater than the theoretical gram capacity of 372 mAh/g of carbon. Using the silicon active material can increase the capacity of the electrochemical apparatus. The silicon active material having gaps filled with a more structurally stable carbon active material can serve as a volume buffer matrix of the silicon active material. The mass percentage of silicon in the active material layer may be selected to be 1% to 45%.

According to some embodiments of this application, along the thickness direction of the electrode sheet, the first pore structure is provided with a first section back away from the current collector and a second section closer to the current collector, and a cross-sectional area of the first section is greater than a cross-sectional area of the second section.

The first pore structure has different cross-sectional sizes at different depth positions, entirely presenting a structure with a wide exterior and a narrow interior. The wide exterior structure facilitates the rapid entry of the external electrolyte into the first pore structure, while the narrow interior structure is conducive to the contact between the electrolyte in the first pore structure and the active material layer.

According to some embodiments of this application, along a thickness direction of the electrode sheet, at least part of the first pore structure penetrates the current collector. The electrolytes on both sides in the thickness direction of the current collector can infiltrate the active material layer through the first pore structure, thereby improving the infiltration efficiency of the electrolyte.

According to some embodiments of this application, along the thickness direction of the electrode sheet, the current collector is provided with at least one second pore structure, and at least part of the first pore structure communicates with the second pore structure. To ensure that the current collector has sufficient strength, the number of the second pore structures is less than that of the first pore structures. The electrolyte on the side of the current collector back away from the active layer can enter the first pore structure from the second pore structure and quickly infiltrate the active material layer.

According to some embodiments of this application, a plurality of first pore structures are provided in the active material layer, and the plurality of first pore structures are spaced apart from each other. Each first pore structure remains independent and unconnected, with a non-fixed pore spacing.

According to some embodiments of this application, in a surface of the active material layer, the plurality of first pore structures are arranged in an array. Array distribution facilitates the infiltration of the electrolyte into the active material layer from various positions, allowing for full contact between the active material layer and the electrolyte.

According to some embodiments of this application, on the surface of the active material layer, a radius of the first pore structure is 1 µm to 50 µm. The radius of the first pore structure should not be less than the original pore radius of the electrode sheet. The overall kinetic performance of the first pore structure with a larger radius is optimized to approach an upper limit. The upper limit for the protection range of the first pore structure is 50 µm, meaning the radius of the first pore structure may be set between 1 µm and 50 µm.

According to some embodiments of this application, an included angle between an axis of the first pore structure and the thickness direction of the electrode sheet is 0° to 10°, which is convenient for an electrolyte to quickly enter.

According to a second aspect, this application further provides an electronic device, including the electrochemical apparatus as described in any one of the above embodiments.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

One or more embodiments are used as examples for description by using corresponding accompanying drawings. These example descriptions impose no limitation on some embodiments. Elements with a same reference sign in the accompanying drawings represent similar elements. Unless otherwise stated, the figures in the accompanying drawings impose no limitation on a scale.
FIG. 1 is an exploded view of an electrode sheet according to some embodiments of this application;
FIG. 2 is a schematic cross-sectional view of an electrode sheet according to some embodiments of this application;
FIG. 3 is a schematic structural diagram of an electrode sheet according to some embodiments of this application;
FIG. 4 is a top view of an electrode sheet according to some embodiments of this application;
FIG. 5 is a top view of an electrode sheet according to some embodiments of this application;
FIG. 6 is a schematic cross-sectional view of an electrode sheet according to some embodiments of this application;
FIG. 7 is a schematic cross-sectional view of an electrode sheet according to some embodiments of this application;
FIG. 8 is a schematic diagram of a relationship between a depth d of a first pore structure and a mass percentage M of a first active material according to some embodiments of this application;
FIG. 9 is a schematic diagram of a relationship between a porosity S d of an active material layer and a mass percentage M of a first active material according to some embodiments of this application;
FIG. 10 is a schematic diagram of a typical cross-sectional morphology of a silicon-carbon effective-substance mixed layer with a non-porous structure;
FIG. 11 is a schematic diagram of calculation of a pore frequency f according to some embodiments of this application;
FIG. 12 is a schematic diagram of a relationship between a pore radius r and an effective reaction area of an electrode sheet according to some embodiments of this application;
FIG. 13 is a schematic diagram of a relationship between a discharge rate and a capacity according to some embodiments of this application;
FIG. 14 is a schematic diagram of a relationship between a state of charge and DCR according to some embodiments of this application;
FIG. 15 is a schematic diagram of a relationship between a state of charge and Rss according to some embodiments of this application;
FIG. 16 is a schematic diagram of an impedance comparison between an electrode sheet with a first pore structure and an electrode sheet with a non-porous structure after cycling according to some embodiments of this application; and
FIG. 17 is a schematic diagram of a relationship between the number of cycles and a thickness according to some embodiments of this application.

In the figure:
100. electrode sheet;
10. current collector; 11. long side; 12. wide side; 13. thickness side; 14. main surface; 15. second pore structure;
20. active material layer; 21. first pore structure; 211. first section; 212. second section; and
30. lithium ion.

### DETAILED DESCRIPTION

The following describes in detail some embodiments of technical solutions of this application with reference to the accompanying drawings. The following embodiments are merely intended for a clearer description of the technical solutions of this application and therefore are used as just examples which do not constitute any limitations on the protection range of this application.

Unless otherwise defined, all technical and scientific terms used herein shall have the same meanings as commonly understood by persons skilled in the art to which this application relates. The terms used herein are intended to merely describe specific embodiments rather than to limit this application. The terms "include", "comprise", and "have" and any other variations thereof in the specification, claims and brief description of drawings of this application are intended to cover non-exclusive inclusions.

In the descriptions of these embodiments of this application, the technical terms "first", "second", and the like are merely intended to distinguish between different objects, and shall not be understood as any indication or implication of relative importance or any implicit indication of the number, specific sequence, or primary-secondary relationship of the technical features indicated. In the descriptions of these embodiments of this application, "multiple" means more than two, unless otherwise specifically defined.

In this specification, reference to "embodiment" means that specific features, structures or characteristics described with reference to these embodiments may be incorporated in at least one embodiment of this application. The word "embodiment" appearing in various places in this specification does not necessarily refer to the same embodiment or an independent or alternative embodiment that is exclusive of other embodiments.

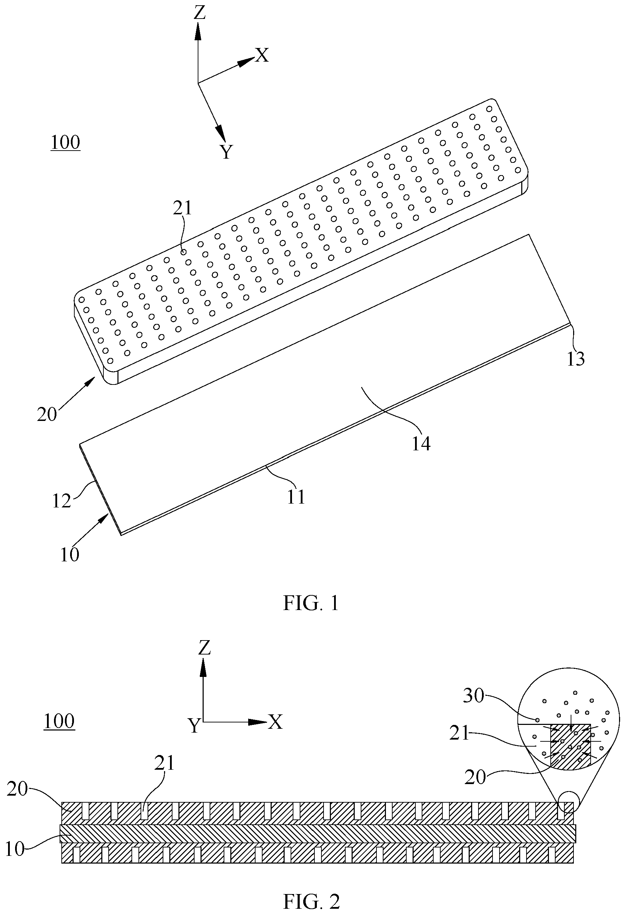

According to a first aspect, an embodiment of this application provides an electrochemical apparatus, with reference to FIGs. 1 and 2. This electrochemical apparatus includes an electrode sheet 100. The electrode sheet 100 includes a current collector 10 and an active material layer 20, and the active material layer 20 is applied to the current collector 10. In this application, the electrode sheet 100 is described as a negative electrode sheet. In other embodiments, the electrochemical apparatus further includes a positive electrode sheet (not shown in the figure), a separator (not shown in the figure), a casing (not shown in the figure), and an electrolyte (not shown in the figure). The negative electrode sheet, the separator, and the positive electrode sheet are sequentially stacked or wound to form an electrode assembly of the electrochemical apparatus, and the electrode assembly and the electrolyte are accommodated within the casing. It should be noted that in an embodiment of this application, the electrochemical apparatus is the smallest unit constituting a battery or battery module and is the specific place for realizing the conversion of electrical energy and chemical energy.

For the current collector 10, refer to FIG. 1. The current collector 10 is entirely in a flat strip-shaped structure, with a basically consistent thickness across its parts. The thickness of the current collector 10 is typically between 3 micrometers (µm) and 20 micrometers. The current collector 10 has a long side 11, a wide side 12, and a thickness side 13. The long side 11 is the edge extending in the length direction (direction X) when the current collector 10 is unfolded flat. The wide side 12 is the edge extending in the width direction (direction Y) when the current collector 10 is unfolded flat. The thickness side 13 is the edge extending in the thickness direction (direction Z) when the current collector 10 is unfolded flat. The current collector 10 has two main surfaces 14, and the two main surfaces 14 are both defined by the long side 11 and the wide side 12. The two main surfaces 14 are opposite along the extension direction of the thickness side 13, and the two main surfaces 14 can be coated with the active material layer 20. The current collector 10 serves as a conductive substrate of the electrode sheet 100. Depending on a different type of electrode sheet 100, a different material can be selected as the current collector 10 of the electrode sheet 100. In this embodiment, a negative electrode sheet is used, and the current collector 10 may be a copper foil.

For the above active material layer 20, refer to FIGs. 1 and 2. The active material layer 20 is the core material layer of the electrochemical apparatus. The active material layer 20 is applied to at least one surface of the current collector 10, for example, applied to one of the two main surfaces 14 of the current collector 10. Alternatively, the active material layer 20 is applied to both main surfaces 14 of the current collector 10. The active material layer 20 includes an active material, a conductive agent, a binder, deionized water, and the like. These materials are mixed, stirred well, and applied to the main surface 14 of the current collector 10 to obtain the active material layer 20. The active material has various specific compositions. In this application, the active material layer 20 includes a first active material and a second active material, and a gram capacity of the first active material is greater than a gram capacity of the second active material.

In some embodiments, the first active material includes at least one of a group consisting of elemental silicon, silicon oxide compound, silicon-carbon composite, or silicon alloy. The second active material includes at least one of a group consisting of graphite, soft carbon, hard carbon, carbon fiber, or meso-carbon microbeads.

Specifically, for example, the first active material is silicon, and the second active material is carbon. The theoretical gram capacity of 4200 mAh/g of silicon is greater than the theoretical gram capacity of 372 mAh/g of carbon. Using the silicon active material can increase the capacity of the electrochemical apparatus. The silicon active material having gaps filled with a more structurally stable carbon active material can serve as a volume buffer matrix of the silicon active material. The mass percentage of silicon in the active material layer 20 may be selected to be 1% to 45%. A higher mass percentage of silicon can increase the capacity of the electrochemical apparatus, and the mass percentage of silicon can be measured by an element analysis (element analysis).

The electronic and ionic conductivity of the silicon material is lower than that of the graphite material. In terms of kinetic parameters of the electrode sheet 100, such as the impedance and the charge and discharge speed, the silicon material lags behind the conventional graphite electrode sheet. To improve the impedance of the electrode sheet 100 and increase the charge and discharge speed of the electrochemical apparatus, the following description is provided in some embodiments. Referring to FIG. 2, the active material layer 20 is provided with at least one first pore structure 21. In the thickness direction (direction Z) of the electrode sheet 100, the first pore structure 21 extends from the active material layer 20 towards the current collector 10. The depth of the first pore structure 21 is 50% to 100% of the thickness of the active material layer 20. It can be understood that when it is 100%, the first pore structure 21 penetrates the active material layer 20 and exposes part of the current collector 10.

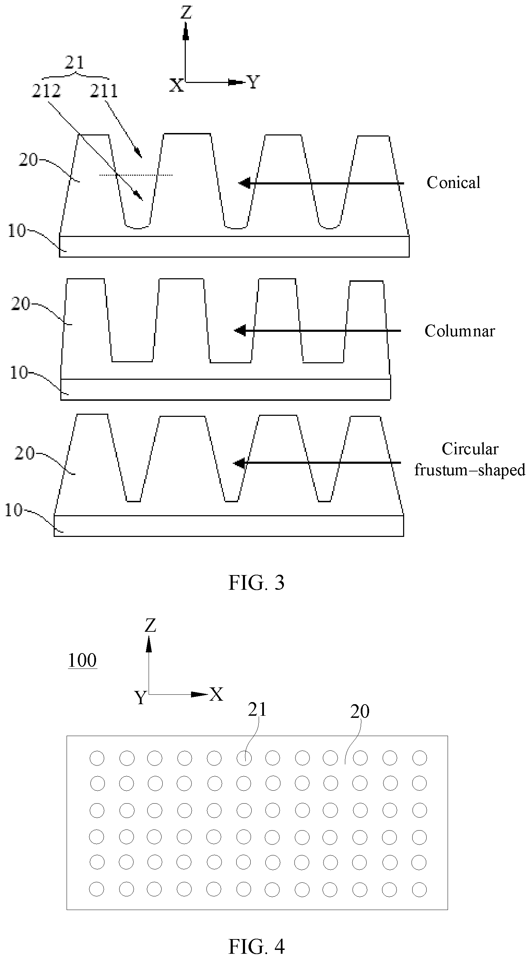

For the shape of the first pore structure 21, refer to FIG. 3. The first pore structure 21 may be cylindrical, circular frustum-shaped, conical, prismatic, prismatic frustum-shaped, or the like. (FIG. 3 shows only some shapes). In the surface of the active material layer 20, the first pore structure 21 may be circular, oval, rectangular, polygonal, or the like. There may be a plurality of first pore structures 21, and the plurality of first pore structures 21 are spaced apart from each other. Each first pore structure 21 remains independent and unconnected, with a non-fixed pore spacing, which can be designed arbitrarily based on the actual condition of the electrode sheet 100.

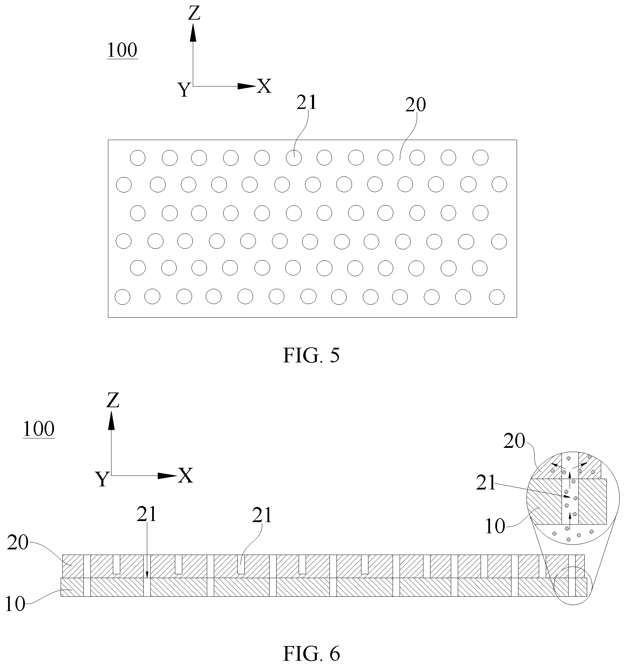

In some embodiments, the plurality of first pore structures 21 are evenly distributed in the active material layer 20. For example, referring to FIG. 4, in the surface of the active material layer 20, the plurality offirst pore structures 21 are evenly distributed in an array. Such even distribution facilitates the infiltration of the electrolyte into the active material layer 20 from various positions, allowing for full contact and reaction between the active material layer 20 and the electrolyte. In some other embodiments, as shown in FIG. 5, the plurality of first pore structures 21 may also be distributed in a honeycomb pattern in the active material layer 20.

Furthermore, in some embodiments, as shown in FIG. 3, along the thickness direction of the electrode sheet 100, the first pore structure 21 is provided with a first section 211 back away from the current collector 10 and a second section 212 closer to the current collector 10. The first section 211 is the entrance of the first pore structure 21, and the second section 212 is the bottom of the first pore structure 21. The area of the cross section of the first section 211 is greater than the area of the cross section of the second section 212, making the entrance of the first pore structure 21 larger. In these embodiments, the first pore structure 21 has different cross-sectional sizes at different depth positions, entirely presenting a structure with a wide exterior and a narrow interior. The wide exterior structure facilitates the rapid entry of the external electrolyte into the first pore structure 21, while the narrow interior structure is conducive to the contact between the electrolyte in the first pore structure 21 and the active material layer 20. The above cross section refers to a cross section of the first pore structure 21 along a direction perpendicular to the thickness direction of the electrode sheet 100. The first pore structure 21 can penetrate the active material layer 20 to a certain depth in a direction perpendicular to the current collector 10, facilitating rapid entry of the electrolyte. In these embodiments, perpendicular means that the included angle between the axis of the first pore structure 21 and the thickness direction of the electrode sheet 100 is 0° to 10°.

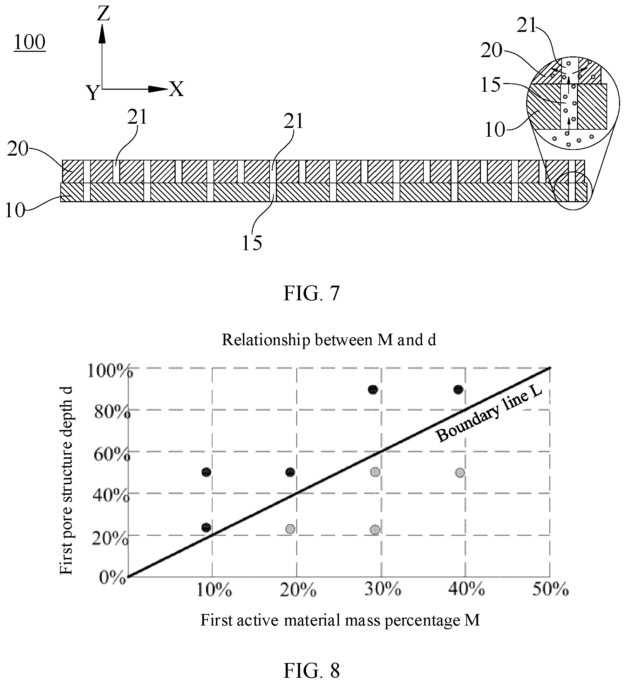

In some embodiments, referring to FIG. 6, at least part of the first pore structure 21 penetrates the current collector 10. When the first pore structure 21 penetrates the current collector 10, the electrolytes on both sides in the thickness direction of the current collector 10 can communicate with each other. In this way, the electrolytes on both sides in the thickness direction of the current collector 10 can infiltrate the active material layer 20 through the first pore structure 21, thereby improving the infiltration efficiency of the electrolyte. In other embodiments, referring to FIG. 7, the current collector 10 is provided with at least one second pore structure 15 along the thickness direction of the electrode sheet 100, and at least part of the first pore structure 21 communicates with the second pore structure 15. In these embodiments, to ensure that the current collector 10 has sufficient strength, there are not too many second pore structures 15. Typically, the number of the second pore structures 15 is less than the number of first pore structures 21, and each second pore structure 15 should preferably communicate with one first pore structure 21. The electrolyte on the side of the current collector 10 back away from the active layer can enter the first pore structure 21 from the second pore structure 15 and infiltrate the active material layer 20.

The first pore structure 21 can be precisely etched to a certain depth on the surface of the electrode sheet 100 using the mature industrial LDP (laser drilling) technology. LDP processing can be directly viewed by disassembling the electrode sheet 100, and has good reversibility. As shown in FIGs. 2, 6, and 7, the first pore structure 21 can be fully infiltrated and filled with the electrolyte, becoming a new lithium ion 30 liquid phase transmission channel, and replacing the fixed channel with a low diffusion coefficient. The lithium ions 30 deeply intercalate into the electrode sheet 100 through the newly constructed first pore structure 21. In addition to the original longitudinal diffusion on the surface of the electrode sheet 100, a new path for lateral diffusion at the first pore structure 21 of the electrode sheet 100 is added, effectively increasing the reaction area of the solid-liquid interface. The first pore structure 21 allows the lithium ions 30 to more easily intercalate into the active material layer 20 in the electrode sheet 100, reducing the difficulty of intercalation and deintercalation of the lithium ions 30 in the active material in the electrode sheet 100, so as to reduce the impedance of the electrode sheet 100, thus improving the overall kinetic performance of the electrode sheet 100. This is conducive to meeting rapid charge and discharge demands of the electrochemical apparatus.

For the depth d (d is defined as the ratio of the depth of the first pore structure 21 to the thickness of the active material layer 20, in the unit: %) of the first pore structure 21 and the mass percentage M of the first active material (M is defined as the mass percentage of the first active material in the active material layer 20, in the unit: %), the inventors of this application conducted relevant tests to determine the relationship between the depth d of the first pore structure 21 and the mass percentage M of the first active material. The results are shown in FIG. 8, where the region below the boundary line L (M/d=0.5) is an ineffective embodiment region with poor kinetic performance optimization, and the region above the boundary line L is an effective embodiment region with good kinetic performance optimization. The depth d of the first pore structure 21 is affected by the mass percentage M of the first active material. A larger amount of the semiconductor silicon material means worse kinetic performance for the electrode sheet 100, and thus it is more intended to apply a deeper first pore structure 21 to extend to a certain depth of the electrode sheet 100, so as to improve the overall kinetic performance. Under the condition of a specific silicon mass percentage, the first pore structure 21 needs to exceed a threshold to achieve a significant kinetic performance optimization effect. To achieve the silicon mass percentage of 1% to 45% in this application, in an embodiment of this application, the relationship between the depth d of the first pore structure 21 and the mass percentage M of the first active material is selected to satisfy 0≤M/d≤0.5. In addition, in this embodiment of this application, to enable more electrolyte to enter the active material layer 20, the depth of the first pore structure 21 is 50% to 100% of the thickness of the active material layer 20, that is, d is 50% to 100%.

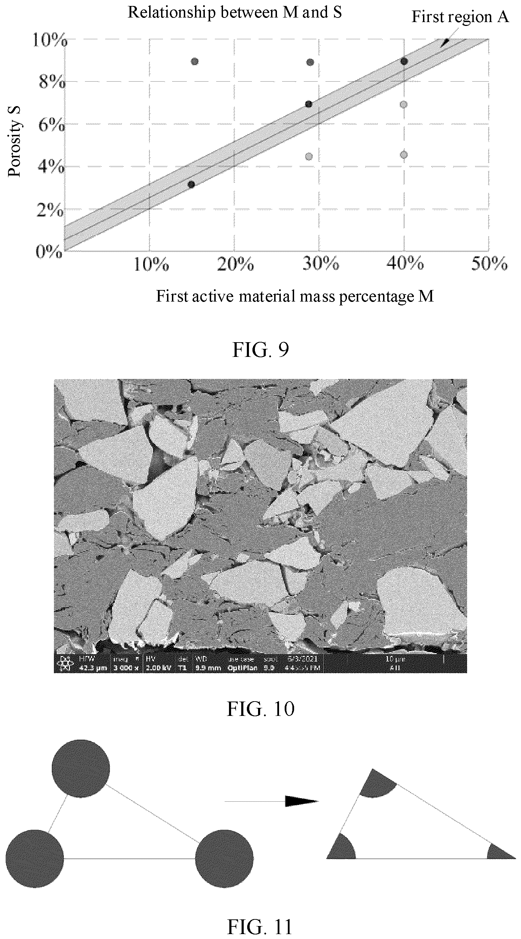

For the porosity S (defined as the occupied volume ratio of all the first pore structures 21 in the active material layer 20, in the unit: %) of the active material layer 20, the porosity S is also affected by the mass percentage M of the first active material. A higher percentage of the first active material in the active material layer 20 requires more first pore structures 21 to improve the kinetic performance of the electrode sheet 100 deteriorated by the first active material. However, more first pore structures 21 inevitably cause a loss in the capacity or energy density of the electrode sheet 100 and even the entire electrochemical apparatus. To determine the relationship between the porosity S of the active material layer 20 and the mass percentage M of the first active material, the inventors of this application conducted relevant testing experiments. The results are shown in FIG. 9, where the porosity S of the active material layer 20 approximately satisfies a linear relationship with the mass percentage M of the first active material. This linear relationship ensures the capacity or energy density of the electrochemical apparatus and the kinetic performance of the electrode sheet 100. The first region A is an effective embodiment region; a region above the first region A is an ineffective embodiment region, with a large capacity loss; and a region below the first region A is also an ineffective embodiment region with poor kinetic performance optimization. It can be seen from the linear relationship in FIG. 9 that when the porosity S of the active material layer 20 and the mass percentage M of the first active material satisfy -1%≤0.2M-S≤3%, the capacity or energy density of the electrochemical apparatus and the kinetic performance of the electrode sheet 100 can be ensured. To reduce energy density loss, the porosity value may be set to less than or equal to 10%.

For the radius r of the first pore structure 21, a larger radius r of the first pore structure 21 allows the electrolyte to more easily enter the first pore structure 21. To ensure the capacity or energy density of the electrochemical apparatus and the kinetic performance of the electrode sheet 100, in a case of a larger radius r of the first pore structure 21, it is more intended to use a shallower first pore structure 21; and conversely, in a case of a smaller radius r, it is more intended to use a deeper first pore structure 21. The radius r of the first pore structure 21 should not be less than the original pore radius of the electrode sheet 100. FIG. 10 is an SEM image (an image of a typical cross-sectional morphology of a silicon-carbon effective-substance mixed layer) of an electrode sheet with a non-porous structure, where the pore radius is always in the submicron range (below 1 µm). Based on this, the minimum radius r of the first pore structure 21 on the surface of the active material layer 20 may be set to above 1 µm.

It is known that the porosity S=απr²df, where α is a structural correction coefficient (a constant) related to the three-dimensional morphology of the first pore structure 21, for example, α=1 for a cylindrical shape, and α=1/3 for a conical shape; and f is defined as the reciprocal of the minimum area required for a single independent first pore structure 21. The calculation method of the pore frequency f is shown in FIG. 11. On the surface of the active material layer 20, the centers of three adjacent first pore structures 21 are lined to form a triangle, and the pore frequency f=1/(2S_{Δ}), where S_{Δ} is the area of the triangle.

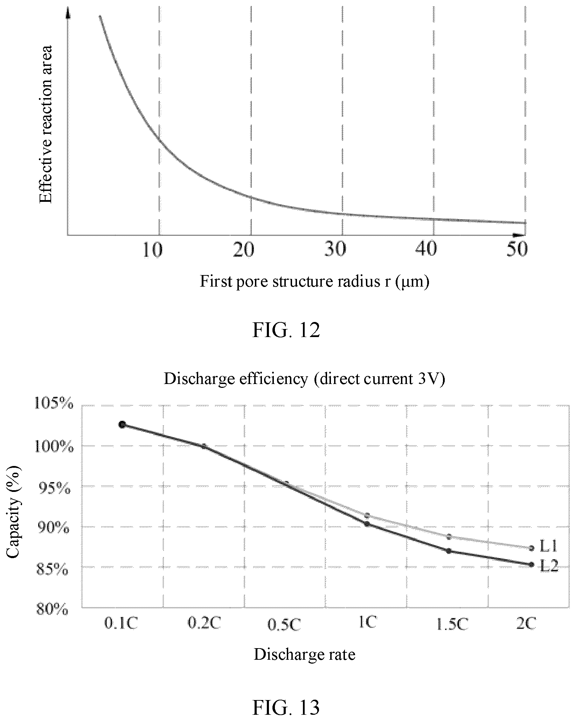

If the pore depth d and porosity S remain unchanged, απr²f also remains unchanged, and the pore frequency f and pore radius r are inversely proportional. Therefore, the area of the triangle formed by lining the centers of the three closest pore structures is S_{Δ}=1/(2f)∝(πr²)/2, and on each individual triangle area S_{Δ} on the electrode sheet 100, the first pore structure 21 generates an effective reaction area of πrd. The newly added effective reaction area ∝πr/ S_{△}∝2/r per unit area of the electrode sheet 100 is inversely proportional to the radius r of the first pore structure 21. Under the condition of setting other parameters the same, a larger radius of the first pore structure 21 indicates a less significant effect of improving the kinetic performance of the electrode sheet 100. The results are shown in FIG. 12, where the newly added interface area by the first pore structure 21 decreases inversely with the increase in the radius r of the first pore structure 21. As a result, the overall kinetic performance of the first pore structure 21 with a larger radius is optimized to approach an upper limit. Therefore, in these embodiments of this application, the upper limit for the protection range of the first pore structure 21 is 50 µm, meaning the radius r of the first pore structure 21 may be set between 1 µm and 50 µm.

To determine the relationship between the structural parameters of the first pore structure 21 and the energy density and kinetic performance, the inventors of this application conducted relevant test experiments. The results are as follows: where Rate is the charge and discharge rate, and a larger Rate indicates better kinetic performance; HL is the high-low temperature test, and a higher HL value indicates better kinetic performance; DCR is the high-frequency impedance test, and a smaller DCR value indicates better kinetic performance; Rss is the low-frequency impedance test, and a smaller Rss value indicates better kinetic performance; and the temperature coefficient is preferably selected to be higher.

**Table 1 Relationship between the structural parameters of the first pore structure and the energy density and kinetic performance**

| | | Comparative example 1 | Example 1 | Example 2 | Example 3 | Example 4 | Example 5 |
|---|---|---|---|---|---|---|---|
| Parameter design of pore structure | | Non-porous structure (Base) | M=40% | M=40% | M=40% | M=15% | M=15% |
| | | | d=100% | d=80% | d=50% | d=100% | d=20% |
| | | | S=8.7% | S=7.0% | S=4.4% | S=8.7% | S=3.5% |
| Parameter range | | / | M/d=0.4 is satisfied | M/d=0.5 is satisfied | M/d=0.8 is not satisfied | M/d=0.15 is satisfied | M/d=0.75 is not satisfied |
| | | | 0.2M-S=-0.7% is satisfied | 0.2M-S=-1% is satisfied | 0.2M-S=3.6% is not satisfied | 0.2M-S=-5.7% is not satisfied | 0.2M-S=-0.5% is satisfied |
| Energy density (ED) | | 740 Wh/L | ↓1.1% | ↓0.9% | A same level | ↓1.6% | ↓1.2% |
| Temperature coefficient (T coefficient) | | 96.6% | ↑0.6% | ↑0.5% | ↑0.1% | ↑0.5% | ↑0.4% |
| Kinetic performance | Rate (2C) | 87.2% | ↑1.9% | ↑1.6% | ↑0.3% | ↑1.5% | ↑1.1% |
| | HL (-20°C) | 48.4% | ↑0.8% | ↑0.7% | ↑0.2% | ↑1.0% | ↑0.5% |
| | DCR (25°C) | 73.1 mΩ | ↓12.7% | ↓10.9% | ↓3.8% | ↓9.1% | ↓6.5% |
| | Rss (25°C) | 243.6 mΩ | ↓8.3% | ↓7.4% | ↓2.6% | ↓7.5% | ↓4.3% |

Table 1 describes the specific effect of specific structural parameters of the first pore structure 21 on the energy density and kinetic performance. The preferred structural parameters of the first pore structure 21 are determined according to three design categories: "whether the first pore structure 21 exists," "whether 0≤M/d≤0.5 is satisfied," and "whether -1%≤0.2M-S≤3% is satisfied." In Example 3, neither 0≤M/d≤0.5 nor -1%≤0.2M-S≤3% is satisfied, resulting in an insignificant increase in the temperature coefficient and low optimization of the kinetic performance. In Example 4, 0≤M/d≤0.5 is satisfied, but -1%≤0.2M-S≤3% is not satisfied, resulting in a significant loss in the energy density. In Example 5, 0≤M/d≤0.5 is not satisfied, but - 1%≤0.2M-S≤3% is satisfied, resulting in a significant loss in the energy density and low optimization of the temperature coefficient and kinetic performance. With reference to Example 1 and Example 2, when 0≤M/d≤0.5 and -1%≤0.2M-S≤3% are satisfied, the energy density loss is small, the temperature coefficient increases significantly, and the kinetic parameters are also notably optimized.

Therefore, in the examples of this application, the mass percentage M of the first active material in the active material layer 20 and the thickness ratio d of the first pore structure 21 in the active material layer 20 satisfy the relationship 0≤M/d≤0.5. The mass percentage M of the first active material in the active material layer 20 and the porosity of the active material layer 20 satisfy the relationship -1%≤0.2M-S≤3%. It should be noted that in Table 1, the same level represents that the two test values are the same or basically the same, for example, with a difference of less than 0.1%. In this application, the degree of difference refers to the value obtained by subtracting the smaller object from the larger object, dividing by the smaller object, and multiplying by 100%.

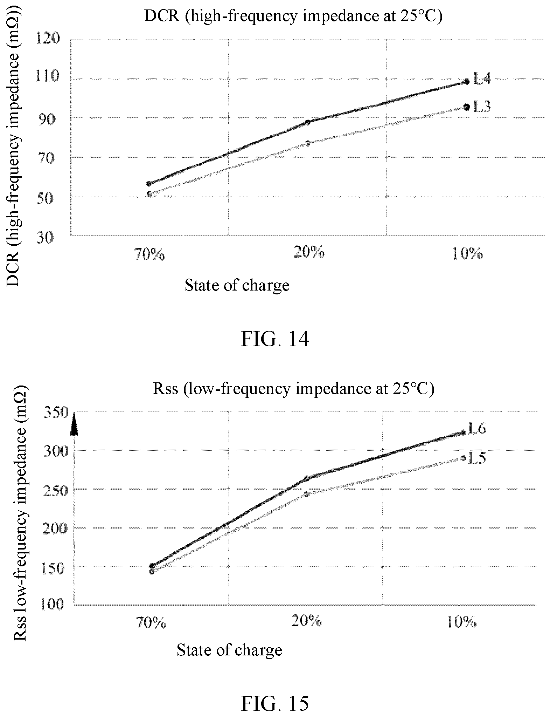

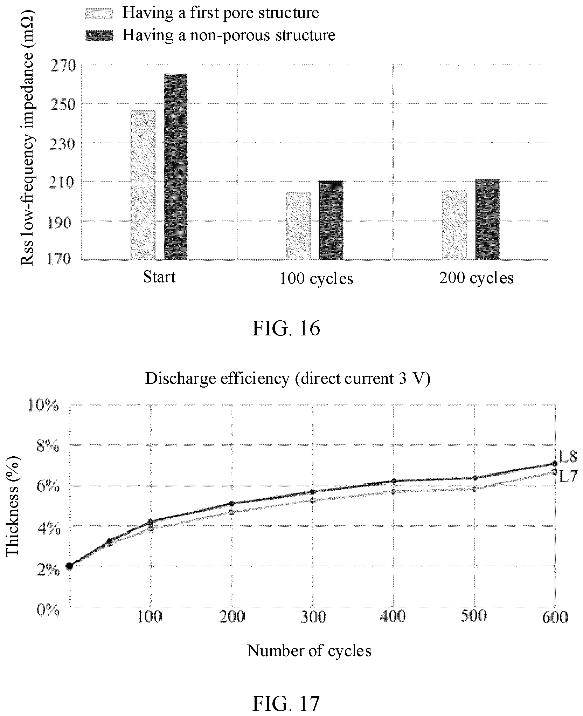

FIG. 13 shows the relationship between the discharge rate and capacity, where L1 represents an electrochemical apparatus using an electrode sheet 100 with the first pore structure 21, and L2 represents an electrochemical apparatus using an electrode sheet with a non-porous structure. It can be seen that as the discharge rate increases, the capacity retention rate of L1 is significantly better than that of L2. The electrochemical apparatus using the electrode sheet with the first pore structure 21 has optimized high-rate discharge performance, with an optimized increase of 1% to 2%. Similarly, the charging rate of the electrochemical apparatus is also significantly increased, with an increase of 0.2C to 1C. FIG. 14 shows the relationship between the state of charge of the electrochemical apparatus and DCR (high-frequency impedance), where L3 represents having the first pore structure 21, and L4 represents having the non-porous structure. FIG. 15 shows the relationship between the state of charge of the electrochemical apparatus and Rss (low-frequency impedance), where L5 represents having the first pore structure 21, and L6 represents having the non-porous structure. FIG. 16 shows an impedance comparison between an electrode sheet 100 with the first pore structure 21 and an electrode sheet 100 with a non-porous structure after cycling. With reference to FIGs. 14 to 16, it can be known that with the use of the electrode sheet 100 with the first pore structure 21, the impedance of the electrochemical apparatus is significantly lower than that of the electrochemical apparatus using the electrode sheet with the non-porous structure. FIG. 17 shows the relationship between the number of cycles and the thickness, where L7 represents having the first pore structure 21, and L8 represents having the non-porous structure. It can be seen that after cycling, the electrochemical apparatus with the first pore structure 21 maintains a similar or slightly optimized swelling thickness compared with the electrochemical apparatus with the non-porous structure, and the first pore structure 21 remains stable after cycling.

In the examples of this application, the gram capacity of the first active material is greater than the gram capacity of the second active material. Adding the first active material with a higher gram capacity can increase the capacity of the electrochemical apparatus. The first pore structure 21 can be fully infiltrated and filled by an electrolyte, and becomes a new lithium ion 30 liquid phase transmission channel, replacing the fixed channel with a low diffusion coefficient. The lithium ions 30 deeply intercalate into the electrode sheet 100 through the newly constructed first pore structure 21. In addition to the original longitudinal diffusion on the surface of the electrode sheet 100, a new path for lateral diffusion at the first pore structure 21 of the electrode sheet 100 is added, effectively increasing the reaction area of the solid-liquid interface. The first pore structure 21 allows the lithium ions 30 to more easily intercalate into the active material layer 20 in the electrode sheet 100, reducing the difficulty of intercalation and deintercalation of the lithium ions 30 in the active material in the electrode sheet 100, so as to reduce the impedance of the electrode sheet 100, thus improving the overall kinetic performance of the electrode sheet 100. This is conducive to meeting rapid charge and discharge demands of the electrochemical apparatus. At the same time, the first pore structure 21 also provides a space where the electrode sheet 100 can freely extend when it strains, allowing the electrode sheet 100 to have the ability to undergo lateral strain in addition to longitudinal strain during swelling due to lithium intercalation. This new lateral strain does not contribute to the macroscopic strain of the electrode sheet 100, but rather alleviates some of the pressure from the longitudinal strain, thereby reducing the strain magnitude of the electrode sheet 100 over long-term cycling. In addition, the active material layer 20 satisfies 0≤M/d≤0.5 and -1%≤0.2M-S≤3% to achieve optimal parameters of the first pore structure 21, which is suitable for a negative electrode sheet with a silicon mass percentage of 1% to 45%, thereby ensuring the capacity or energy density of the electrochemical apparatus and the kinetic performance of the electrode sheet 100.

An embodiment of this application also provides an electronic device, including the electrochemical apparatus according to any of the foregoing embodiments. The electronic device in this embodiment of this application is not particularly limited, and may be any known electronic device used in the prior art. For example, the electronic device includes but is not limited to a Bluetooth earphone, a mobile phone, a tablet, a laptop, an electric toy, an electric tool, an electric bicycle, an electric vehicle, a ship, and a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

Finally, it should be noted that the foregoing embodiments are merely intended to describe the technical solutions of this application, and are not intended to limit this application. Under the idea of this application, the foregoing embodiments or the technical features in different embodiments can also be combined, the steps can be implemented in any order, and there are many other changes in different aspects of this application as described above, which, for the sake of brevity, are not provided in detail. Although this application is described in detail with reference to the foregoing embodiments, persons of ordinary skill in the art should understand that modifications can be made to the technical solutions described in the foregoing embodiments, or equivalent substitutions can be made to some technical features therein, and these modifications or substitutions do not make the essence of the corresponding technical solutions depart from the scope of the technical solutions of some embodiments of this application.

## Claims

1. An electrochemical apparatus, comprising: an electrode sheet, the electrode sheet comprises a current collector and an active material layer, the active material layer is applied to the current collector, wherein the active material layer comprises a first active material and a second active material, and a gram capacity of the first active material is greater than a gram capacity of the second active material; and
the active material layer is provided with at least one first pore structure, and the active material layer satisfies the following conditions:
(a) 0≤M/d≤0.5, wherein M is a mass percentage of the first active material in the active material layer, and d is a ratio of a depth of the first pore structure to a thickness of the active material layer; and
(b) -1%≤0.2M-S≤3%, wherein S is a porosity of the active material layer.

2. The electrochemical apparatus according to claim 1, wherein M is 1% to 45%.

3. The electrochemical apparatus according to claim 1, wherein S≤10%.

4. The electrochemical apparatus according to claim 1, wherein along a thickness direction of the electrode sheet, the depth of the first pore structure is 50% to 100% of the thickness of the active material layer.

5. The electrochemical apparatus according to claim 4, wherein along the thickness direction of the electrode sheet, the first pore structure is provided with a first section back away from the current collector and a second section closer to the current collector, and a cross-sectional area of the first section is greater than a cross-sectional area of the second section.

6. The electrochemical apparatus according to claim 1, wherein along a thickness direction of the electrode sheet, at least part of the first pore structure penetrates the current collector.

7. The electrochemical apparatus according to claim 1, wherein along the thickness direction of the electrode sheet, the current collector is provided with at least one second pore structure, and at least part of the first pore structure communicates with the second pore structure.

8. The electrochemical apparatus according to claim 1, wherein a plurality of the first pore structures are provided in the active material layer, and the plurality of the first pore structures are spaced apart from each other.

9. The electrochemical apparatus according to claim 8, wherein in a surface of the active material layer, the plurality of first pore structures are arranged in an array.

10. The electrochemical apparatus according to any one of claims 1 to 9, wherein on the surface of the active material layer, a radius of the first pore structure is 1 µm to 50 µm.

11. The electrochemical apparatus according to claim 1, wherein the first active material comprises at least one of silicon, silicon oxide, silicon-carbon composite, or silicon alloy.

12. The electrochemical apparatus according to claim 11, wherein the second active material comprises at least one of graphite, soft carbon, hard carbon, carbon fiber, or meso-carbon microbeads.

13. The electrochemical apparatus according to claim 11 or 12, wherein the first active material is silicon, and the second active material is carbon.

14. The electrochemical apparatus according to any one of claims 1 to 9, wherein an included angle between an axis of the first pore structure and the thickness direction of the electrode sheet is 0° to 10°.

15. An electronic device, comprising the electrochemical apparatus according to any one of claims 1 to 14.
